# EUROPÄISCHE PATENTSCHRIFT

(11) **EP 1 831 901 B1**
(45) Veröffentlichungstag und Bekanntmachung des Hinweises auf die Patenterteilung: **19.10.2016**
(21) Anmeldenummer: 05823866.8
(22) Anmeldetag: 22.12.2005
(51) Int. Cl.: H01F 27/12, F03D 1/00

(54) **ELEKTRISCHES BAUTEIL MIT KÜHLKREISLAUF FÜR DEN UNTERWASSERBETRIEB**
ELECTRICAL COMPONENT WITH A COOLING CIRCUIT FOR UNDERWATER OPERATION
COMPOSANT ELECTRIQUE A CIRCUIT DE REFROIDISSEMENT POUR UNE UTILISATION SOUS-MARINE

(30) Priorität: 27.12.2004 DE 102004063508
(43) Veröffentlichungstag der Anmeldung: 12.09.2007
(73) Patentinhaber: Siemens Aktiengesellschaft, 80333 München (DE)
(72) Erfinder: FINDEISEN, Jörg, 01169 Dresden (DE)
(86) Internationale Anmeldenummer: PCT/EP2005/057126
(87) Internationale Veröffentlichungsnummer: WO 2006/069974

(56) Entgegenhaltungen:
- DE-A1- 10 308 499
- GB-A- 371 926
- GB-A- 2 028 003
- JP-B2- 3 327 142
- US-A- 1 539 837
- US-A1- 2004 051 615
- US-B1- 6 520 737

## Beschreibung

Die Erfindung betrifft ein elektrisches und/oder elektronisches Bauteil, insbesondere einen Transformator, umfassend einen Kühlkreislauf mit einer Wärmetauscheinheit. Weiterhin umfasst die Erfindung die Einbindung solcher Bauteile in Offshore Plattformen, sowie die Gestaltung derartiger Plattformen.

Die Verknappung geeigneter Binnenlandstandorte sowie die hohen Windgeschwindigkeiten auf See lassen die Offshore-Windenergienutzung zu einer wirtschaftlich interessanten Alternative gegenüber der Onshore-Aufstellung von Windenergieanlagen werden.
Ein wesentlicher Kostenschwerpunkt bei der Netzanbindung eines Offshore-Windparks sind die seeseitig zu errichtenden Umspannwerke.

Die verwendeten elektrischen Bauteile, wie z.B. Transformatoren, Gleichrichter und Schalter, werden gemäß dem Stand der Technik entweder auf einer über dem Wasser befindlichen Plattformebene montiert und betrieben, oder innerhalb von verkapselten Segmenten, wie z.B. dem Turm einer Windenergieanlage, untergebracht. So beschreibt die
DE 103 13 036 A1 ein Verfahren zur Einrichtung einer Windenergieanlage. Das Leistungsmodul in der dortigen Erfindung ist insbesondere ein Transformator, der einen Träger aufweist, der auf das Fundament der Windenergieanlage aufgesetzt und von dem Turm der Windenergieanlage anschließend vollständig umschlossen ist.

Nachteilig bei der dortigen Erfindung ist jedoch, dass die auf Grund des Betriebes des Transformators entstehende Wärmeenergie unkontrolliert in den Turm der Windenergieanlage aufsteigt und nicht gezielt von dem Transformator weggeführt wird. Ein effektiver und gleichmäßiger Wärmeabtransport vom Transformator ist mit der dortigen Erfindung nicht gewährleistet.
Weiterhin ist auf diese Weise nur die Unterbringung von elektrischen Bauteilen möglich, welche Abmessungen deutlich unter dem Durchmesser des Turmes aufweisen.
Die Anordnung der elektrischen Bauteile weit oberhalb der Meeresoberfläche ist seit langem aus dem Stand der Technik bekannt.
Hintergrund der hohen Bauweise von Offshore-Plattformen ist, dass für die Auslegung der benötigten Plattformen im Offshore-Bereich die so genannte Jahrhundertwelle als Berechnungsgrundlage für die Konstruktion zu Grunde gelegt wird, die der größtmöglichen Flutwelle der letzten einhundert Jahre in der jeweiligen Region entspricht. Aufgrund dieser baulichen Randbedingungen werden die elektrischen Bauteile, wie Transformatoren, und andere Komponenten einer Umspannstation auf hoher See zum Schutz vor der Zerstörung durch eine Jahrhundertwelle auf Plattformebenen deutlich über dem Wasserspiegel angeordnet, was mit erheblichen Kosten für die Aufstellung und den Betrieb der Plattformen verbunden ist. Aufgrund der großen Höhen über dem Meeresspiegel dieser so konstruierten Plattformen müssen sehr hohe Stabilitätsanforderungen von der Konstruktion und den verwendeten Materialien der Plattform erfüllt werden.
Fundamente für Windenergieanlagen sind z.B. aus DE10310708A1 Bekannt und erfordern einen hohen Bauaufwand.

Des Weiteren ist es Stand der Technik, dass die abzuführende Wärmeenergie durch zusätzliche Radiatoren und Lüfter abgeführt wird, wobei die Radiatoren und Lüfter nebeneinander an der Kesselwand des Transformators angebracht sind. Für einen ausreichenden Wärmeabtransport ist die großflächige Anordnung einer Vielzahl von Radiatoren auf der Kesselwand des Transformators notwendig. An diese Radiatoren werden Lüfter zur vertikalen oder horizontalen Belüftung der Transformatorkesselwand angebracht und vergrößern somit das vom Transformator benötigte Raumvolumen. Der Einsatz von Lüftern verlangt ebenfalls die Aufstellung von zusätzlichen Anlagen und Schaltungen zur Bereitstellung der Betriebsspannung und Steuerung der Lüfter. Hierzu muss zusätzlicher Platz in der unmittelbaren Nähe des Transformators bereitgestellt werden.
Der Energieverbrauch der Lüfter verursacht ebenfalls Kosten. Die Steuerung der Lüfter muss in speziellen Schaltschränken mit Schalteinrichtungen untergebracht werden. Am Transformator müssen bei Verwendung von Lüftern Motorschutzschalter sowie Überwachungsgeräte zur Sicherung und Steuerung angebracht werden, die zum Teil hohe Aufstellungs- und Betriebskosten verursachen. Weiterhin ist eine elektrische Verbindung zwischen Lüfterschaltschrank und den Lüftern erforderlich, die entsprechend der Umweltbedingungen im Offshore-Bereich umfangreich gesichert werden muss. Der Lüftersteuerschrank und die Lüfter selber benötigen darüber hinaus regelmäßige Inspektionen und Wartungen, was insbesondere bei Offshore-Anlagen mit erheblichen Kosten verbunden ist. Weiterhin können wetter- und jahreszeitlich bedingt im Offshore-Bereich nicht jederzeit Inspektions- und Wartungsarbeiten durch Personen vor Ort durchgeführt werden.

Alternativ ist aus dem Stand der Technik ein Unterwassertransformator bekannt, wie z.B. aus der DE 101 27 276 A1, der für einen Betrieb unterhalb des Meeresspiegels konzipiert ist. Für den Betrieb eines Unterwassertransformators ist generell keine Plattform oberhalb der Meeresoberfläche notwendig. Nachteilig an den bisherigen Unterwassertransformatoren ist jedoch, dass diese Unterwassertransformatoren keine gezielte Wärmeabführung aufweisen und daher größer als eigentlich notwendig dimensioniert sind.
Solche Unterwassertransformatoren benötigen des Weiteren aufwändige Mittel zur Gewährleistung des Druckausgleiches bei thermisch bedingten Volumenschwankungen des Kühl- und/ oder Isoliermediums.
Ein weiterer Unterwassertransformator, welcher einen zweiten Behälter aufweist, der den ersten Behälter vollständig umfasst und mit druckdichten Kabelbuchsen ausgestattet ist wird in EP1082736B1 beschrieben. Auch dieses Konzept ist eher für den Einsatz von kleinen Verteilertransformatoren in extremen Tiefen vorgesehen, löst die genannten Probleme nicht und gewährleistet keine effektive Kühlung.

GB 371 926 A offenbart Kühlmittel zur Ableitung von Wärme, die in einem elektrischen Gerät erzeugt wird, wobei Kühlröhren eines Wärmetauschers von einem Kühlmedium gekühlt werden.

JP 3 327142 B2 offenbart ein elektromagnetisches Gerät, das einen mit Isolieröl gefüllten Behälter und ein mit dem Behälter verbundenes Ausdehnungsgefäß zur Kompensation von temperaturbedingten Volumenänderungen des Isolieröls umfasst.

GB 2 028 003 A offenbart einen unter Wasser betriebenen Transformator, der in einem mit einer Kühlflüssigkeit gefüllten Gehäuse angeordnet ist.

US 6 520 737 B1 offenbart eine Offshore-Windkraftanlage mit einem Kühlungssystem zur Ableitung von Wärme von einem Leistungsübertragungssystem in Meerwasser, das die Offshore-Windkraftanlage umgibt.

Aufgabe der vorliegenden Erfindung ist es, ein Verfahren zum Betrieb eines wartungsarmen elektrischen und/oder elektronischen Bauteils bereitzustellen, das einen effektiven Wärmeabtransport beim Betrieb auf hoher See ermöglicht und dabei gleichzeitig geringe Abmessungen des elektrischen und/oder elektronischen Bauteils gewährleistet.

Im Folgenden wird im Sinne der Erfindung unter einem elektrischen Bauteil ein elektrisches und/oder elektronisches Bauteil bzw. eine Kombination von entsprechenden Bauteilen verstanden.

Die Bezeichnung Transformator wird stellvertretend für elektrische Bauteile verwendet.

Erfindungsgemäß wird die Aufgabe durch die Merkmale des Patentanspruchs 1 gelöst. Dabei ist vorgesehen, dass mindestens ein Kühlelement der Wärmetauscheinheit von einer ersten Flüssigkeit, insbesondere Meerwasser, umströmt wird, wobei der Abstand zwischen den Kühlelementen und die Abmessungen der Kühlelemente so gewählt werden, dass eine turbulente Umströmung der ersten Flüssigkeit um die Kühlelemente entsteht. In Abhängigkeit der Viskosität der gewählten ersten Flüssigkeit werden die Abmessungen der Kühlelemente und der jeweiligen Abstände gewählt. Durch diese Anordnung lässt sich ein effektiver Wärmeabtransport der während des Betriebes des elektrischen Bauteils entstehenden Wärme gewährleisten, da durch die turbulente Strömung große Flüssigkeitsmengen mit der Wärmetauscheinheit in Kontakt kommen und die von der Wärmetauscheinheit abgegebene Wärme aufnehmen und schnell abführen. Bei der Verwendung des elektrischen Bauteils im Offshore-Bereich wird die Wärmetauscheinheit auf einer Plattformebene unterhalb der Meeresoberfläche angeordnet und der Wärmeaustausch mit dem vorhandenen Meerwasser als erste Flüssigkeit dadurch ermöglicht. Die Durchschnittstemperaturen des Meerwassers liegen z.B. in der Nord- und Ostsee bei maximal 20°C und eignen sich daher hervorragend als Wärmesenke für die im elektrischen Bauteil entstehende Wärmeenergie, die über die Wärmetauscheinheit an das umgebende Meerwasser abgegeben wird.

Zur Gewährleistung eines hohen Durchsatzes der ersten Flüssigkeit an der Wärmetauscheinheit werden in einer bevorzugten Ausführung des elektrischen Bauteils Strömungsleiteinrichtungen in der Umgebung der Wärmetauscheinheit angeordnet. Hierdurch wird das Meerwasser als erste Flüssigkeit kanalisiert und auf die Wärmetauscheinheit gelenkt. Die Strömungsleiteinrichtungen sind so ausgestaltet, dass sie entweder eine laminare Strömung in Richtung auf die Kühlelemente erzeugen, die anschließend durch die Abmessungen der Kühlelemente in eine turbulente Strömung des Meerwassers umschlägt. Andererseits kann die Form der Strömungsleiteinrichtung, insbesondere bei ortsnaher Aufstellung in der Nähe der Wärmetauscheinheit, so beschaffen sein, dass direkt eine turbulente Strömung erzeugt und durch die Abmessungen der Kühlelemente der Wärmetauscheinheit anschließend noch weiter verstärkt wird.

Die Form, Größe und Anzahl der Strömungsleiteinrichtungen werden dabei in Abhängigkeit von den Umgebungsbedingungen und der Strömungsgeschwindigkeiten des Meerwassers in der Nähe der Wärmetauscheinheit gewählt. Als Form der Strömungsleiteinrichtung werden vor allem großräumige Flächenanordnungen bevorzugt, die die Meeresströmungen aus den unterschiedlichen Richtungen in Richtung auf die Wärmetauscheinheit umlenken und kanalisieren. Eine beispielhafte Form der Strömungsleiteinrichtungen ist z.B. in der DE 10 2004 030 522.6 offenbart.

Vorteilhafterweise ist das elektrische Bauteil dicht abgeschlossen und vollständig vom Meerwasser als erste Flüssigkeit umströmbar, wobei die Außenwand des elektrischen Bauteils Aussparungen und Abstandsflächen zur Vergrößerung der Oberfläche und/oder Strömungsleiteinrichtungen zur Kanalisierung der ersten Flüssigkeit aufweist. Durch die Vergrößerung der Oberfläche des elektrischen Bauteils mittels zusätzlicher Abstandsflächen und Aussparungen wird nicht nur ein effektiver Wärmeabtransport über den Kühlkreislauf, sondern auch über die unmittelbare Außenwand des elektrischen Bauteils gewährleistet. Durch das den Transformator umströmende Meerwasser wird durch die Vergrößerung der Wärmeaustauschfläche nicht nur bezogen auf die Wärmeaustauscheinheit, sondern auch in Bezug auf die gesamte Außenwand des Transformators ein größtmöglicher Wärmeaustausch und damit eine optimale Kühlung des Transformators als elektrisches Bauteil bereitgestellt.

In einer bevorzugten Ausgestaltung zirkuliert innerhalb des Kühlkreislaufes eine zweite Flüssigkeit, insbesondere ein Kühlöl, wobei gleichzeitig der Kühlkreislauf mit einem Flüssigkeitsausdehnungsgefäß oberhalb der Oberfläche der ersten Flüssigkeit verbunden ist. Der Kühlkreislauf ist dabei über einen Verbindungskanal mit dem Flüssigkeitsausdehnungsgefäß verbunden. Durch diese Ausgestaltung des elektrischen Bauteils wird der für die elektrische Sicherheit vorteilhafte Überdruck innerhalb des Bauteils erzeugt. Vorteilhafterweise wird dieses Gefäß zur Aufnahme der thermisch bedingten Volumenschwankungen der Kühl- und/oder Isolierflüssigkeit des Bauteils und / oder des Kühlkreislaufes benutzt.
Gleichzeitig können Druckschwankungen innerhalb des Kühlkreislaufes durch das Flüssigkeitsausdehnungsgefäß kompensiert werden.

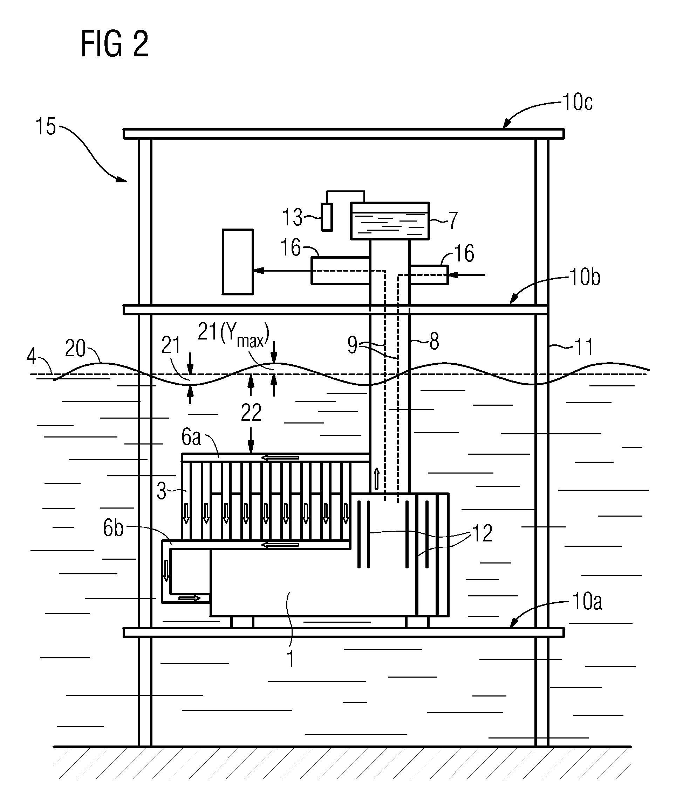

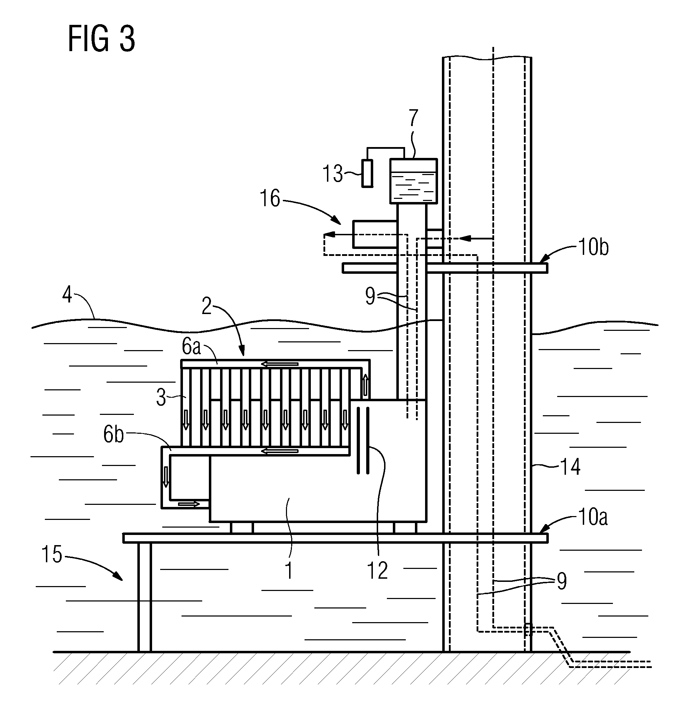

Ein besonderes Problem stellt der elektrische Anschluss unter Wasser dar. Dieses Problem wird in einer weiteren Ausführungsform der Erfindung dadurch gelöst, dass ölgefüllte Leitungskanäle auf die Plattform geführt werden. Diese Ausführung ermöglicht ein sicheres und problemloses Anschließen oder Austauschen der Kabel, da diese oberhalb der Wasseroberfläche angeschlossen werden. Der Anschluss erfolgt vorteilhafterweise mittels Kabelanschlussbuchsen.
Im Ausführungsbeispiel (Fig. 2 und 3) wird die Leitung des Kühlmediums zum Ausdehnungsgefäß mit dem Leitungskanal für die elektrische Verbindung kombiniert. Dabei ist unterhalb des Ausdehnungsgefäßes ein Kabelanschlusskasten vorgesehen.

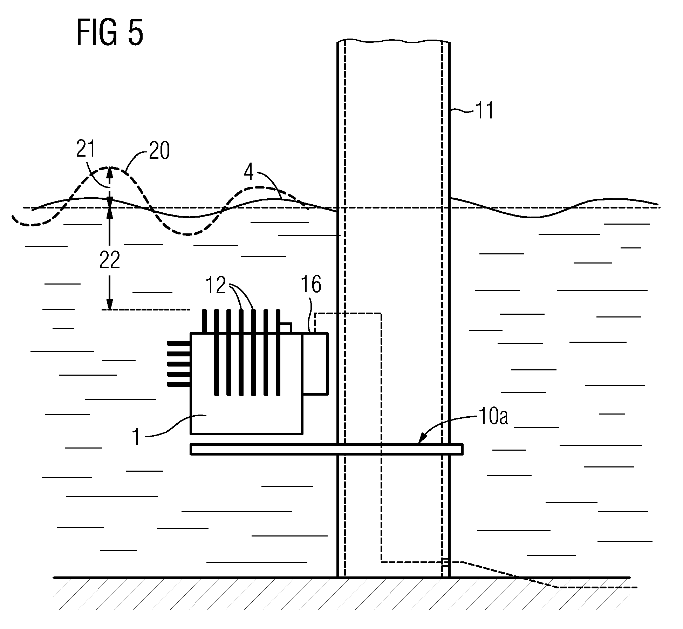

Weiterhin ist die Nutzung der Stützpfeiler der Offshore Plattform als Kabelkanal möglich (Fig. 3 und 5).
Auch diese Stützpfeiler können in einer besonderen Ausführungsform mit einer Isolierflüssigkeit gefüllt sein und damit als sicherer ölisolierter Leitungskanal genutzt werden. Auch hier ist bei Verwendung eines Ölausdehnungsgefäßes die Kombination der Ölausdehnungsleitung zum über dem Wasserspiegel liegenden Ausdehnungsgefäß mit dem Leitungskanal für die elektr. Verbindung in einem Stützpfeiler möglich.

Bevorzugt sind im Verbindungskanal elektrische Verbindungsleitungen zum elektrischen Bauteil angeordnet, wobei die Verbindungsleitungen so beschaffen sind, dass diese durch die zweite Flüssigkeit keine chemischen und/oder physikalischen Beschädigungen erleiden, z.B. durch eine Außenbeschichtung der Verbindungsleitungen oder deren Materialauswahl.
Der Verbindungskanal kann damit vollständig in den Kühlkreislauf integriert und mit der zweiten Flüssigkeit, wie z.B. dem Kühlöl, gefüllt sein. In diesem Falle sind die elektrischen Verbindungsleitungen im Kühlkreislauf integriert und werden auf eine oberhalb der Meeresoberfläche gelegene Plattformebene geführt. Auf dieser Plattformebene erfolgt über geeignete Kontaktstücke bzw. Kabelanschlussbuchsen der elektrische Anschluss des unterhalb der Meeresoberfläche befindlichen elektrischen Bauteils mit den äußeren Spannungsversorgungsleitungen. Alternativ verlaufen im Verbindungskanal zwei voneinander getrennte Verbindungsschächte, die zum einen den elektrischen Verbindungsleitungen vorbehalten sind und zum anderen eine separate Verbindung zwischen dem Flüssigkeitsausdehnungsgefäß und dem Kühlkreislauf herstellen. In dieser Konfiguration des elektrischen Bauteils müssen die elektrischen Verbindungsleitungen nicht speziell gegen chemische und/oder physikalische Beschädigungen durch das Kühlöl geschützt sein.

In einer bevorzugten Ausführungsform sind die Komponenten des elektrischen Bauteils, insbesondere die Wärmetauscheinheit, der elektrische Außenanschluss und das Flüssigkeitsausdehnungsgefäß, auf unterschiedlichen Ebenen einer Plattform angeordnet. Die Ebenen der Plattform befinden sich zum Teil unterhalb der Meeresoberfläche. Diese Anordnung ermöglicht eine effektive Raumausnutzung des elektrischen Bauteils auf der Plattform und eine wesentliche Reduzierung der Größe der Plattform, insbesondere bei Aufstellungen für Offshore-Anwendungen. Die mit der Windlast und der Jahrhundertwelle belasteten Flächen werden durch die Verkleinerung der Plattformgröße stark reduziert oder können sogar ganz entfallen. Hierdurch ergibt sich ebenfalls eine wesentlich geringere Belastung der Stützpfeiler der Plattform. Aufgrund der verringerten Belastung der statischen Konstruktion der Plattform sind keine großräumigen Verankerungen der Stützpfeiler am Meeresboden notwendig, was Kosten und Umweltbelastungen des Untergrundes vermeidet.

Bevorzugt sind die elektrischen Verbindungsleitungen und/oder Kühlkanäle innerhalb der Stützen der Plattform angeordnet. Die Leitungs- und Kanalverlegung innerhalb der Stützen der Plattform ermöglicht die Vermeidung der Bereitstellung eines separaten Verbindungskanals zwischen der unterhalb der Meeresoberfläche gelegenen Wärmetauscheinheit und dem auf unterschiedlichen Ebenen der Plattform angeordneten, elektrischen Bauteil und /oder dem über der Wasseroberfläche gelegenen Ausdehnungsgefäß für die Kühl- und/oder Isolierflüssigkeit. Außerdem sind die Verbindungsleitungen und Kühlkanäle gegen äußere Einflüsse, wie z.B. Korrosion durch Meerwasser, starke Meerwasserströmungen oder Windlast, geschützt.

Weitere erfindungsgemäße Ausführungen sind in den Unteransprüchen beschrieben. Die Erfindung wird anhand der nachfolgenden Zeichnungen näher erläutert. Es zeigt:
- Fig. 1: eine schematische Darstellung des erfindungsgemäßen elektrischen Bauteils oberhalb der Meeresoberfläche auf einer Plattform;
- Fig. 2: eine schematische Darstellung des erfindungsgemäßen elektrischen Bauteils unterhalb der Meeresoberfläche mit einem Flüssigkeitsausdehnungsgefäß;
- Fig. 3: eine schematische Darstellung des erfindungsgemäßen elektrischen Bauteils angeordnet am Turm einer Offshore-Windenergieanlage unterhalb der Meeresoberfläche;
- Fig. 4: eine schematische Darstellung des erfindungsgemäßen elektrischen Bauteils unterhalb der Meeresoberfläche mit erfindungsgemäßen Strömungsleiteinrichtungen;
- Fig. 5: eine schematische Darstellung der erfindungsgemäßen Plattform.

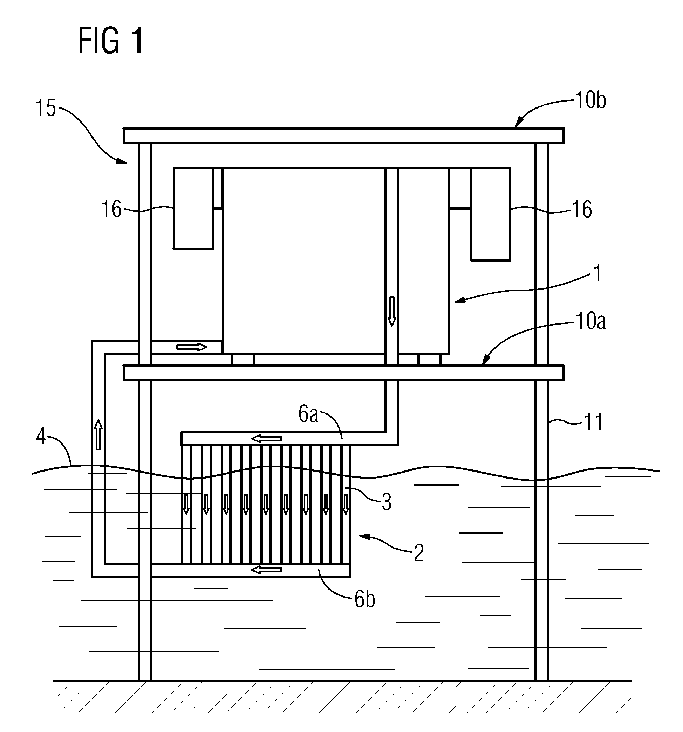

Die Figur Fig. 1 zeigt einen erfindungsgemäßen Transformator als elektrisches Bauteil 1, der auf einer Plattform 15 oberhalb der Meeresoberfläche angeordnet ist, wobei das Meerwasser die erste Flüssigkeit 4 im Sinne der Erfindung definiert. Der Kühlkreislauf 6a, 6b ist mit einer Wärmetauscheinheit 2 verbunden, die an bzw. unterhalb der Oberfläche der ersten Flüssigkeit 4 - also der Meeresoberfläche - angeordnet ist. Die Kühlelemente 3 der Wärmetauscheinheit 2 werden von dem Meerwasser 4 umströmt und führen die im Kühlmedium des Kühlkreislaufes 6a, 6b befindliche Wärme effektiv ab. Der Abstand zwischen den Kühlelementen 3 und die Abmessungen der Kühlelemente 3 relativ zur Anströmrichtung der ersten Flüssigkeit 4 sind so gewählt, dass eine turbulente Umströmung der ersten Flüssigkeit 4 erzeugt wird.

Die Figur Fig.2 zeigt einen erfindungsgemäßen Transformator 1, der unterhalb der Oberfläche des Meerwassers 4 auf der untersten Ebene 10a der Plattform 15 angeordnet ist, wobei sich die Wärmetauscheinheit 2 ebenfalls unterhalb der Oberfläche des Meerwassers 4 befindet. Der Druckausgleich des im Kühlkreislauf 6a,6b befindlichen Kühlmediums, hier ein Kühlöl, wird über ein Flüssigkeitsausdehnungsgefäß 7, das oberhalb der Oberfläche des Meerwassers 4 angeordnet ist, gewährleistet. Die Flüssigkeitssäule in dem Verbindungskanal 8 zwischen Flüssigkeitsausdehnungsgefäß 7 und dem Transformator 1 erzeugt ebenfalls einen ausreichenden Innendruck innerhalb des Bauteils und seines Kühlkreislaufes 6a,6b relativ zum Umgebungsdruck des äußeren Meerwassers 4. Dieses AusdehnungsGefäß ist vorteilhafterweise mit einem Luftentfeuchter 13 ausgestattet, um das Einbringen von Feuchtigkeit in die Kühl- und / oder Isolierflüssigkeit zu verhindern. Aufgrund des Flüssigkeitsdruckes der ersten Flüssigkeit 4 auf das elektrische Bauteil 1 - und damit auf den Kühlkreislauf 6a,6b - dient das Flüssigkeitsausdehnungsgefäß 7 zum einen als Überlaufreservoir und zum anderen dem Aufbau des notwendigen Innendruckes innerhalb des Kühlkreislaufes 6a,6b. Weiterhin können über den Verbindungskanal 8 zwischen dem Transformator 1 und dem Flüssigkeitsausdehnungsgefäß 7 die elektrischen Verbindungsleitungen 9 zum Transformator 1 geführt werden. An der Außenwand des Transformators 1 sind Aussparungen und Abstandsflächen 12 angebracht, welche die Wärmeabgabe durch die vergrößerte Wärmeaustauschfläche an das umgebende Meerwasser 4 erhöhen.
Figur 2 zeigt weiterhin eine erfindungsgemäße Offshore-Plattform 15, wobei die Ebene 10a zur Aufnahme einer elektrischen Komponente unterhalb der Wasseroberfläche 4 angeordnet ist. Durch den erfindungsgemäßen Aufbau der Plattform 15 ist es möglich, die Größe der Plattform 15 erheblich zu reduzieren. Im Stand der Technik sind bisher nur Plattformen bekannt, deren Ebenen weit oberhalb der Wasseroberfläche angeordnet sind und damit einen Schutz gegen die regional unterschiedliche Jahrhundertwelle gewährleisten. Durch die erfindungsgemäße Plattform 15 können elektrische Komponenten, wie z.B. erfindungsgemäße elektrische Bauteile 1, unterhalb der Wasseroberfläche 4 angeordnet werden und sind damit vor den Einflüssen an der Wasseroberfläche geschützt.
Das dargestellte Ausführungsbeispiel zeigt eine Offshore-Plattform für ein Umspannwerk, gekennzeichnet dadurch, dass die großflächigen und schweren Komponenten, welche für die Dimensionierung nach Masse, maximaler Windlast und so genannter Jahrhundertwelle ausschlaggebend sind, insbesondere Transformatoren 1 und Gleichrichter unterhalb des Wasserspiegels in einer Tiefe angeordnet werden, welche mindestens eine Amplitude 21 der für den Standort ermittelten Jahrhundertwelle 20 unter dem Meeresspiegel liegt. Erfindungsgemäß sind die für die Platzierung der Baugruppen 1 des Umspannwerkes vorgesehenen Plattformetagen in der Art gestaltet, dass sie ganz oder teilweise für strömende Medien 4 durchlässig sind. Im Ausführungsbeispiel ist die gesamte Unterwasseretage 10a seitlich offen, so dass diese der Strömungen des Seewassers nur einen geringen, bei der Dimensionierung zu berücksichtigen Widerstand entgegensetzt, gleichzeitig aber einen guten Zutritt des Seewassers zu den zu kühlenden Komponenten ermöglicht.

Die Figur Fig.3 zeigt wiederum einen erfindungsgemäßen Transformator 1, dessen Wärmetauscheinheit 2 unterhalb der Oberfläche des Meerwassers 4 auf einer Plattform 15 angeordnet ist und ein Flüssigkeitsausdehnungsgefäß 7 aufweist, welches oberhalb des Meerwassers 4 angeordnet ist. Die Plattform 15 ist in der Figur 3 an dem unteren Turmbereich 14 einer Windenergieanlage angebracht und benötigt keine zusätzlichen zur Meeresoberfläche reichenden Pfeiler. Die Stabilität des oberen Plattformsegments 10b wird ausschließlich durch die Verbindung mit dem Turm 14 der Windenergieanlage gewährleistet. Durch die Reduzierung der Anzahl der die
Meeresoberfläche durchdringenden Plattformpfeiler wird die Angriffsfläche für die so genannte Jahrhundertwelle weiter reduziert. Da hier weder das elektrische Bauteil 1, noch zusätzliche Pfeiler den Wirkungsbereich der Jahrhundertwelle und starker Winde erreichen, sind wesentliche Einsparungen für die Gründung, das Fundament und die Gesamtkonstruktion des Offshore-Umspannwerkes möglich.

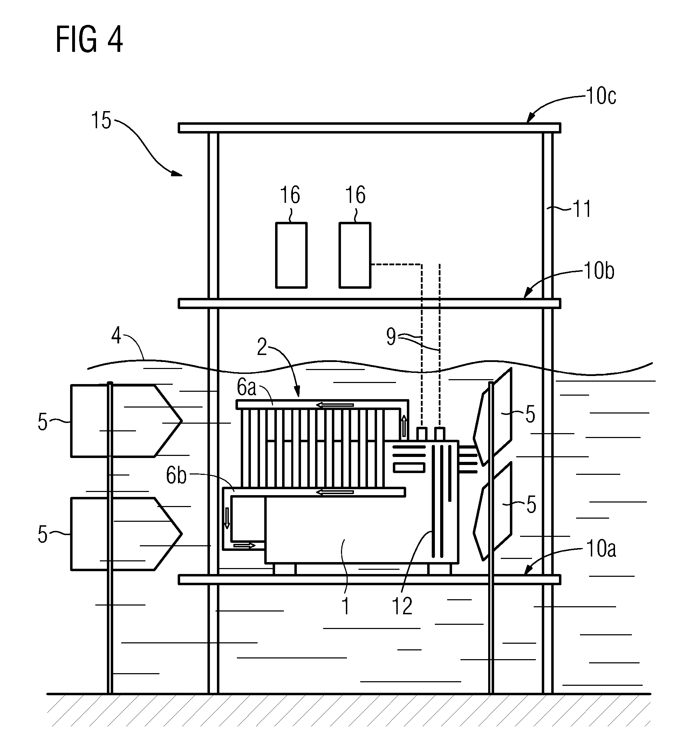

Die Strömungsleiteinrichtungen 5 in der Figur Fig. 4 können entweder direkt am unterhalb der Meersoberfläche gelegenen Transformator 1 oder in unmittelbarer Nähe zur Wärmetauscheinheit 2 aufgestellt sein. Die Befestigung der Strömungsleiteinrichtungen 5 erfolgt in diesem Falle direkt am Transformator 1 bzw. an der Plattform 15. Ebenfalls ist es möglich, die Strömleiteinrichtungen 5 außerhalb der Plattform 15 anzuordnen und so ein weit reichendes Strömungsfeld zum erfindungsgemäßen Transformator 1 bzw. zur Wärmetauscheinheit 2 zu gewährleisten. Die Form, Größe und Anzahl der Strömungsleiteinrichtungen 5 variiert nach Umgebung und Strömungsgeschwindigkeit, wobei neben glatten Flächen auch Strömungsleiteinrichtungen 5, wie z.B. in der DE 10 2004 030 522.6 beschrieben, zum Einsatz kommen.
Die Figur Fig.5 zeigt ein Ausführungsbeispiel bei dem das elektrische Bauteil am Turm (11) einer Windenergieanlage derart angebracht wird, dass es sich unterhalb des Wasserspiegels (4) und außerhalb des Turmes (11) befindet sowie sein Gewicht vom Fundament des Turmes der Windkraftanlage getragen wird. Durch diese erfindungsgemäße Anordnung des Bauteils ist es möglich, die Kosten der Plattform erheblich zu reduzieren. Dabei wird das elektrische Bauteil auch in diesem Ausführungsbeispiel, derart unterhalb des Wasserspiegels (4) angeordnet, dass über dem Bauteil ein Abstand (22) zum Seespiegel (4) eingehalten wird, welcher größer ist als die Amplitude (21) der für den Standort ermittelten Jahrhundertwelle (20). Gleichzeitig wird auch in diesem Ausführungsbeispiel die bereits beschriebene effektive Kühlung des elektrischen Bauteils erreicht. Die Energieversorgung oder -weiterleitung wird durch Unterseekabel (in der Figur 5 als gestrichelte Linie dargestellt) gewährleistet. Die elektrischen Versorgungsleitungen sind dabei in die Plattform, insbesondere in die Stützen 11, integriert.

## Patentansprüche

1. Verfahren zum Betrieb eines elektrischen Bauteils (1) mit Wicklungsleitern, das Bauteil (1) umfassend einen Kühlkreislauf (6a,6b) mit einer Wärmetauscheinheit (2),
**dadurch gekennzeichnet, dass** die Wärmetauscheinheit (2) unterhalb der Oberfläche einer ersten Flüssigkeit (4) angeordnet wird, wobei mindestens ein Kühlelement (3) der Wärmetauscheinheit (2) von der ersten Flüssigkeit (4)umströmt wird, und wobei die Abmessungen des Kühlelementes (3) und/oder der Abstand zwischen zwei Kühlelementen (3) so gewählt werden, dass eine turbulente Umströmung der ersten Flüssigkeit (4) um das Kühlelement (3) entsteht.

2. Verfahren nach Anspruch 1,
**dadurch gekennzeichnet, dass** durch Strömungsleiteinrichtungen (5) die erste Flüssigkeit (4) auf die Wärmetauscheinheit (2) und/oder das elektrische Bauteil (1) kanalisiert wird.

3. Verfahren nach einem der Ansprüche 1 oder 2,
**dadurch gekennzeichnet, dass** das elektrische Bauteil (1) dicht abgeschlossen und vollständig von der ersten Flüssigkeit (4) umströmt wird, wobei die Außenwand des elektrischen Bauteils (1) Aussparungen und Abstandsflächen (12) zur Vergrößerung der Oberfläche und/oder Strömungsleiteinrichtungen (5) zur Kanalisierung der ersten Flüssigkeit (4) aufweist.

4. Verfahren nach einem der Ansprüche 1 bis 3, **dadurch gekennzeichnet, dass**
innerhalb des Kühlkreislaufes (6a, 6b) eine zweite Flüssigkeit zirkuliert und der Kühlkreislauf (6a, 6b) mit einem Flüssigkeitsausdehnungsgefäß (7) oberhalb der Oberfläche der ersten Flüssigkeit (4) über einen Verbindungskanal (8) verbunden wird.

5. Verfahren nach einem der Ansprüche 1 bis 4,
**dadurch gekennzeichnet, dass** das Bauteil (1) mit einer Isolier- und/oder Kühlflüssigkeit gefüllt wird und über eine Verbindungsleitung (8) mit einem zweiten Gefäß (7) für die Isolier- und / oder Kühlflüssigkeit verbunden wird, welches über dem Wasserspiegel (4) positioniert ist und durch den hydrostatischen Druck der in diesem Gefäß befindlichen Flüssigkeit zu einem Überdruck in dem elektrischen Bauteil (1) und seiner Kühlanlage (2) führt.

6. Verfahren nach Anspruch 4 oder 5,
**dadurch gekennzeichnet, dass** im Verbindungskanal (8) elektrische Verbindungsleitungen (9) zum elektrischen Bauteil (1) angeordnet werden, wobei die Verbindungsleitungen (9) so beschaffen sind, dass diese durch die zweite Flüssigkeit keine chemische und/oder physikalische Beschädigungen erleiden.

7. Verfahren nach einem der Ansprüche 1 bis 6, **dadurch gekennzeichnet, dass**
auf einer Plattform (15) mit mindestens zwei Ebenen (10a,10b) die Wärmetauscheinheit (2), das elektrische Bauteil (1), der elektrische Außenanschluss (16) und/oder das Flüssigkeitsausdehnungsgefäß (7) angeordnet werden.

8. Verfahren nach mindestens einem der Ansprüche 4 bis 7,d a
durch gekennzeichnet, dass die elektrischen Verbindungsleitungen (9) und/oder Kühlkanäle (6a, 6b) und/oder der Verbindungskanal (8) innerhalb der Stützen (11) der Plattform (15) angeordnet werden.

9. Verfahren nach mindestens einem der vorher genannten Ansprüche, **gekennzeichnet dadurch, dass** das elektrische Bauteil (1) auf einer Offshore-Plattform (15) für ein Umspannwerk unterhalb des Wasserspiegels (4) derart angeordnet wird, dass über dem Bauteil ein Abstand (22) zum Seespiegel (4) eingehalten wird, welcher größer ist als die Amplitude (21) der für den Standort ermittelten Jahrhundertwelle (20).

10. Verfahren nach Anspruch 9, **gekennzeichnet dadurch, dass** eine für die Platzierung des elektrischen Bauteils (1) des Umspannwerkes vorgesehene Plattformetage (10a) in der Art gestaltet wird, dass sie ganz oder teilweise für strömende Medien (4) durchlässig ist.

11. Verfahren nach Anspruch 9 oder 10, **gekennzeichnet**
**dadurch, dass** das elektrische Bauteil (1) am Turm (11) einer Windenergieanlage derart angebracht wird, dass es sich unterhalb des Wasserspiegels (4) und außerhalb des Turmes (11) befindet sowie sein Gewicht vom Fundament des Turmes der Windkraftanlage getragen wird.

## Claims

1. Method for operating an electrical component (1) having winding conductors, said component (1) comprising a cooling circuit (6a, 6b) with a heat exchanging unit (2),
**characterized in that**
the heat exchanging unit (2) is arranged below the surface of a first liquid (4), wherein the first liquid (4) flows around at least one cooling element (3) of the heat exchanging unit (2), and wherein the dimensions of the cooling element (3) and/or the distance between two cooling elements (3) are chosen to ensure that the first liquid (4) flows in a turbulent form around the cooling element (3).

2. Method according to Claim 1,
**characterized in that**
the first liquid (4) is ducted onto the heat exchanging unit (2) and/or the electrical component (1) by means of flow guide devices (5).

3. Method according to one of Claims 1 or 2,
**characterized in that**
the electrical component (1) is closed to form a seal and the first liquid (4) flows completely around it, with the outer wall of the electrical component (1) having cutouts and spacing surfaces (12) in order to enlarge the surface area, and/or flow guide devices (5) in order to duct the first liquid (4).

4. Method according to one of Claims 1 to 3,
**characterized in that**
a second liquid circulates within the cooling circuit (6a, 6b), and the cooling circuit (6a, 6b) is connected to a liquid expansion vessel (7) above the surface of the first liquid (4) via a connection channel (8).

5. Method according to one of Claims 1 to 4,
**characterized in that** the component (1) is filled with an insulating and/or cooling liquid and is connected via a connecting line (8) to a second vessel (7) for the insulating and/or cooling liquid, which second vessel (7) is positioned above the water level (4), and leads to an overpressure in the electrical component (1) and in its cooling system (2) as a result of the hydrostatic pressure of the liquid located in this vessel.

6. Method according to Claim 4 or 5,
**characterized in that**
electrical connecting lines (9) to the electrical component (1) are arranged in the connecting channel (8), with the connecting lines (9) being designed such that they are not chemically and/or physically damaged by the second liquid.

7. Method according to one of Claims 1 to 6,
**characterized in that**
the heat exchanging unit (2), the electrical component (1), the electrical external connection (16) and/or the liquid expansion vessel (7) are/is arranged on a platform (15) with at least two levels (10a, 10b).

8. Method according to one of Claims 4 to 7,
**characterized in that**
the electrical connecting lines (9) and/or cooling channels (6a, 6b) and/or the connecting channel (8) are/is arranged within the supports (11) for the platform (15).

9. Method according to at least one of the abovementioned claims,
**characterized in that**
the electrical component (1) is arranged on an offshore platform (15) for a substation under the water level (4) such that a distance (22) to the sea surface (4) is maintained above the component, which distance (22) is greater than the amplitude (21) of the hundred-year wave (20) determined for that location.

10. Method according to Claim 9,
**characterized in that**
a platform level (10a) which is provided for positioning of the electrical component (1) of the substation is designed in such a way that it is entirely or partially permeable for flowing media (4).

11. Method according to Claim 9 or 10,
**characterized in that**
the electrical component (1) is fitted to the tower (11) of a wind energy installation such that it is located under the water level (4) and outside the tower (11), and its weight is borne by the foundation of the tower of the wind power installation.

## Revendications

1. Procédé pour faire fonctionner un composant (1) électrique ayant des conducteurs d'enroulement, le composant ( 1 ) comprenant un circuit ( 6a, 6b ) de refroidissement ayant un groupe ( 2 ) d'échange de chaleur, **caractérisé en ce que** le groupe ( 2 ) d'échange de chaleur est disposé en dessous de la surface d'un premier liquide ( 4 ), le premier liquide ( 4 ) passant autour d'au moins un élément ( 3 ) de refroidissement du groupe ( 2 ) d'échange de chaleur et les dimensions de l'élément ( 3 ) de refroidissement et/ou la distance entre deux éléments ( 3 ) de refroidissement étant choisie (s) de manière à ce que le premier liquide ( 4 ) passe autour de l'élément ( 3 ) de refroidissement suivant un écoulement turbulent.

2. Procédé suivant la revendication 1,
**caractérisé en ce que**
on canalise le premier liquide ( 4 ) sur le groupe ( 2 ) d'échange de chaleur et/ou sur le composant ( 1 ) électrique par des dispositifs ( 5 ) de conduite de l'écoulement.

3. Procédé suivant l'une des revendications 1 ou 2,
**caractérisé en ce que** l'on ferme le composant ( 1 ) électrique d'une manière étanche et on l'entoure complètement par le premier liquide ( 4 ), la paroi extérieure du composant ( 1 ) électrique ayant des évidements et des surfaces ( 12 ) de mise à distance pour agrandir la surface et/ou des dispositifs ( 5 ) de conduite d'écoulement pour canaliser le premier liquide ( 4 ).

4. Procédé suivant l'une des revendications 1 à 3,
**caractérisé en ce que**
un deuxième liquide circule dans le circuit ( 6a, 6b ) de refroidissement et le circuit ( 6a, 6b ) de refroidissement communique par un conduit ( 8 ) de liaison avec un récipient ( 7 ) d'expansion de liquide au-dessus de la surface du premier liquide ( 4 ).

5. Procédé suivant l'une des revendications 1 à 4,
**caractérisé en ce que** l'on remplit le composant ( 1 ) d'un liquide isolant et/ou de refroidissement et il communique par un conduit ( 8 ) de liaison avec un deuxième récipient ( 7 ) pour le liquide isolant et/ou de refroidissement qui est placé au-dessus du niveau ( 4 ) de l'eau et qui, par la pression hydrostatique du liquide se trouvant dans ce récipient donne une surpression dans le composant ( 1 ) électrique et dans son système ( 2 ) de refroidissement.

6. Procédé suivant la revendication 4 ou 5,
**caractérisé en ce que**, dans le conduit ( 8 ) de liaison, sont montées des lignes ( 9 ) électriques de liaison allant au composant ( 1 ) électrique, les lignes ( 9 ) électriques de liaison étant telles qu'elles ne subissent pas d'endommagement chimique et/ou physique par le deuxième liquide.

7. Procédé suivant l'une des précédentes revendications 1 à 6,
**caractérisé en ce que** le groupe d'échange de chaleur, le composant ( 1 ) électrique, la borne ( 16 ) électrique extérieure et/ou le récipient ( 7 ) d'expansion de liquide sont disposés sur une plateforme ( 15 ) ayant au moins deux plans ( 10a, 10b ).

8. Procédé suivant au moins l'une des revendications 4 à 7,
**caractérisé en ce que**
les lignes ( 9 ) électriques de liaison et/ou les conduits ( 6a, 6b ) de refroidissement et/ou le conduit ( 8 ) de liaison sont disposés dans les appuis ( 11 ) de la plateforme ( 15 ).

9. Procédé suivant au moins l'une des revendications mentionnées précédemment,
**caractérisé en ce que** le composant ( 1 ) électrique est disposé sur une plateforme ( 15 ) offshore pour un poste de transformation en dessous du niveau ( 4 ) de l'eau de manière à maintenir, par le composant, une distance ( 22 ) au niveau ( 4 ) de la mer qui est plus grande que l'amplitude ( 21 ) de la vague ( 20 ) séculaire pour le lieu.

10. Procédé suivant la revendication 9,
**caractérisé en ce qu'**un étage ( 10a ) de la plateforme prévu pour mettre le composant ( 1 ) électrique du poste de transformation est conformé de manière à être perméable en tout ou en partie à des fluides ( 4 ) en écoulement.

11. Procédé suivant la revendication 9 ou 10,
**caractérisé en ce que** le composant ( 1 ) électrique est mis sur la tour ( 11 ) d'une éolienne de manière à se trouver en dessous du niveau ( 4 ) de l'eau et à l'extérieur de la tour ( 11 ), son poids étant supporté par la fondation de la tour de l'éolienne.
